# EUROPÄISCHE PATENTANMELDUNG

(11) **EP 4 382 192 A1**
(43) Veröffentlichungstag der Anmeldung: **12.06.2024**
(21) Anmeldenummer: 23213759.6
(22) Anmeldetag: 01.12.2023
(51) Int. Cl.: B01D 53/04

(54) **ADSORBERPARTITIONIERUNG**

(30) Priorität: 09.12.2022 DE 102022132792
(71) Anmelder: Vaillant GmbH, 42859 Remscheid NRW (DE)
(72) Erfinder: Krampe-Zadler, Christof, 44628 Herne (DE); Lingk, Tobias, 42799 Leichlingen (DE); Spahn, Hans-Josef, 40699 Erkrath (DE)
(74) Vertreter: Popp, Carsten

(57) **Zusammenfassung**

Adsorptionsvorrichtung (1) zur Sicherung einer Wärmepumpe oder einer Kühl- oder Gefriereinrichtung, die mit einem entzündlichen oder gefährlichen Kältemittel betrieben wird, und die in einem Gehäuse installiert ist, wobei das Gehäuse geeignet für eine Aufstellung innerhalb eines Gebäudes ist, die Adsorptionsvorrichtung aufweisend mindestens einen Einlass (2) für ein Luft-Gasgemisch, der mit dem Inneren des Gehäuses verbunden ist, mindestens einen Auslass (3) für Luft, der mit der Umgebung des Gehäuses verbunden ist, mindestens ein Festbett, wobei die Adsorptionsvorrichtung (1) aus Teiladsorbern (4, 6, 8, 10) gebildet wird, wobei die einzelnen Teile entweder durch Strukturierungen voneinander abgetrennt sind oder aus miteinander verbundenen Einzeladsorbern gebildet sind, die Teiladsorber (4, 6, 8, 10) miteinander hydraulisch verbunden (5, 7, 9) sind.

## Beschreibung

Die Erfindung betrifft eine Adsorptionsvorrichtung, die als Sicherungseinrichtung für den Fall vorgesehen wird, dass irreguläre Zustände in Kältekreisen auftreten, in denen ein als Kältemittel wirkendes Arbeitsfluid in einem thermodynamischen Kreisprozess, wie zum Beispiel dem Clausius-Rankine-Kreisprozess, geführt wird. Vorwiegend sind dies Wärmepumpen, Klimaanlagen und Kühlgeräte, wie sie in Wohngebäuden gebräuchlich sind. Der aus dem Stand der Technik bekannte Adsorber wird hierbei in geeigneter Weise partitioniert, entweder durch Aufteilung in Teiladsorber oder durch Strukturelemente oder beides.

Die zum Einsatz kommenden thermodynamischen Kreisprozesse sind seit langem bekannt, ebenso die Sicherheitsprobleme, die bei der Verwendung geeigneter Arbeitsfluide entstehen können. Abgesehen von Wasser sind die bekanntesten damaligen Arbeitsfluide brennbar und giftig. Sie führten im vergangenen Jahrhundert zur Entwicklung der Sicherheitskältemittel, die aus fluorierten Kohlenwasserstoffen bestanden. Es zeigte sich jedoch, dass diese Sicherheitskältemittel die Ozonschicht schädigen, zur Klimaerwärmung führen, und dass ihre sicherheitstechnische Unbedenklichkeit zu konstruktiven Unachtsamkeiten führte. Bis zu 70 % des Umsatzes entfiel auf den Nachfüllbedarf undichter Anlagen und deren Leckageverluste, der hingenommen wurde, solange dies im Einzelfall als wirtschaftlich vertretbar empfunden wurde und Bedarf an Ersatzbeschaffung förderte.

Der Einsatz dieser Kältemittel wurde aus diesem Grund Restriktionen unterworfen, in der Europäischen Union beispielsweise durch die F-Gas-Verordnung (EU) 517/2014. Als Folge werden gerne brennbare Kältemittel verwendet, die klimaschädlichen Nachteile nicht aufweisen, dies sind vor allem R290 (Propan), R600a und R1270. Diese haben den weiteren Vorteil besonders hoher erreichbarer Wirkungsgrade, es müssen aber wegen der Brennbarkeit Vorkehrungen hinsichtlich der Sicherheit gegenüber Notfällen getroffen werden. Dies betrifft vor allem Leckagen nach Betriebsstörungen.

Die auftretenden Probleme bei der Sicherheitsauslegung solcher Anlagen werden in der EP 4 008 979 A1 anschaulich und ausführlich beschrieben. In vielen Fällen kommen daher Adsorber mit Aktivkohle oder anderen geeigneten Adsorbenzien zum Einsatz. Sofern das leckagebedingt austretende Kältemittel oder Arbeitsfluid schwerer als Luft ist, sinkt es im Wärmepumpenbehälter zunächst nach unten, wo typischerweise auch die Einlassöffnungen für Adsorber angeordnet sind. Ansteigender Druck im Wärmepumpenbehälter aufgrund des zusätzlichen, unter Druck ausströmenden Kältemittels bewirkt dann eine Strömung durch den Adsorber, die auch von Lüftern oder anderen Strömungsförderern unterstützt werden kann. Im Adsorber wird dann das Kältemittel gebunden und kann nicht in den Aufstellungsraum austreten.

Die DE 10 2011 116 863 A1 beschreibt ein Verfahren zur Sicherung einer Vorrichtung für einen thermodynamischen Kreisprozess, welche mit einem Prozessfluid betrieben wird, das mindesten eine umweltgefährliche, giftige und/oder entzündliche Substanz enthält oder daraus besteht. Im Falle einer Leckage in der Vorrichtung für einen thermodynamischen Kreisprozess wird ein Adsorptionsmittel mit dem Prozessfluid, insbesondere Ammoniak, Propan oder Propen, in Kontakt gebracht und die Substanz durch das Adsorptionsmittel selektiv gebunden. Das Adsorptionsmittel wird nach Gebrauch regeneriert. Als Adsorptionsmittel werden Aktivkohle, Zeolith, auch in Kombination mit Imidazol oder Phosphaten, ferner CuBTC vorgeschlagen, das Adsorptionsmittel kann in Form einer Schüttung, eines Formkörpers, eines Anstrichs, eines Sprühfilms oder einer Beschichtung ausgestattet sein. Die Trägerstruktur des Formkörpers kann aus Mikrostruktur, Lamellenstruktur, Rohrbündel, Rohrregister und Blech bestehen und muss mechanisch stabil sowie stark oberflächenvergrößernd sein. Eine Umwälzung der potenziell kontaminierten Luft erfolgt üblicherweise kontinuierlich, kann aber auch durch einen Sensor initiiert werden, der die Lüftung nach Erreichen eines Schwellenwerts oder bei einem erkannten Havariefall einschaltet. Die Adsorption kann innerhalb oder außerhalb eines geschlossenen Raumes durchgeführt werden.

Die DE 10 2021 111 808 A1 beschreibt die Regeneration eines Adsorbers mit einer Adsorptionsmittelschüttung, welche in einem Adsorber dazu verwendet wird, leckagebedingt aus einer Kältemaschine ausgetretenes entzündliches Arbeitsfluid, beispielsweise R290 oder R600a oder R1270, zu adsorbieren. Für diese Regeneration wird der Adsorber in der Weise aufgeteilt, dass er abschnittsweise aufheizbar und wieder abkühlbar ist, Vor allem VOC - volatile organic compounds - wie Terpene, Methan, Lösemittel, organische Säuren, Aldehyde und dergleichen, die sich in der Raumluft in geringen Konzentrationen befinden und sich mit der Zeit ablagern können, werden so entfernt Die Schrift lehrt jedoch nicht, wie solche Aufteilungen des Adsorbers angesichts beengter Raumverhältnisse innerhalb eines Wärmepumpengehäuses vorteilhaft vorzunehmen ist und wie bei solchen Aufteilungen die Gleichmäßigkeit der Durchströmung immer gewährleistet werden kann, d.h. wie ein hydraulischer Abgleich erfolgen könne.

Die EP 3 106 780 A1 beschreibt eine Wärmepumpenanlage, die in einem mit einem Bindemittel ausgekleideten, luftdichten Gehäuse untergebracht ist. Innerhalb dieses Gehäuses kann eine Adsorptionseinheit mit einer Zwangslüftung angeordnet sein, die im Umluftbetrieb die Luft im Gehäuse reinigt. Dieser Umluftbetrieb kann kontinuierlich oder nur im Störfall oder in regelmäßigen Intervallen erfolgen.

Hinzu kommt ein grundsätzlicher Zielkonflikt bei der Verwendung von Adsorbern und Bindemitteln. Sofern Arbeitsfluid aus einer kleinen Leckage austritt, soll ein Bindemittel, sei es ein Adsorptionsmittel oder ein chemisches Bindemittel, auch bei kleinen Partialdrücken in der Lage sein, das gesamte Arbeitsfluid aufzunehmen. Dies geschieht am besten in einer langsamen Durchströmung durch ein feinverteiltes Medium. Im Falle eines denkbaren, wenn auch sehr seltenen Abrisses einer Arbeitsfluid-führenden Leitung wird jedoch in sehr kurzer Zeit eine große Menge Arbeitsfluid unter hohem Druck freigesetzt, welche das zumeist druckdichte Gehäuse schlagartig unter Druck setzt. Bei Versuchen ergaben sich Spitzendruckwerte von bis zu 25 hPa, was zu Verformungen typischer Bauformen und nachfolgendem Austritt von Arbeitsfluid führen würde.

In solchen Fällen muss nicht nur das gesamte Arbeitsfluid aufgenommen werden, wie es im Stand der Technik seit langem bekannt ist, sondern es muss auch schnell zu einer Druckentlastung kommen. Geschlossene Vorrichtungen mit einem feinverteilten Medium, das einem Arbeitsfluid beim Einströmen oder beim Durchströmen einen hohen Strömungswiderstand entgegensetzen würde, wären nicht geeignet, die erforderliche schnelle Druckentlastung herbeizuführen.

Aber auch herkömmliche Vorrichtungen, die einen durchströmten Adsorber oder einen mit einem anderen Bindemittel gefüllten Behälter vorsehen, in dem ein entweichendes Arbeitsfluid-Luftgemisch gereinigt wird, bevor es in den Aufstellungsraum entweichen kann, sind problematisch. So wäre die Summe der Einzeldruckverluste, die sich aus dem Eintrittsdruckverlust, dem des Sorptionsbettes und dem Austrittsdruckverlust ergibt, immer noch so hoch, dass es eines erheblichen Überdruckes im Gehäuse bedürfte, um schnell genügend viel Arbeitsfluid-Luftgemisch durch eine solche Vorrichtung hindurchzutreiben, um auf diese Weise ohne zusätzlichen Lüfter einen schnell entstehenden Überdruck abzubauen. Dieser Überdruck ist aber gerade nicht erwünscht und soll möglichst nicht erst entstehen, darf also auch nicht erforderlich sein, um ihn selbst schnell abzubauen. Hierdurch entsteht ein innerer Zielkonflikt.

Ein weiterer Zielkonflikt entsteht durch den Platzbedarf in Verbindung mit der Weglänge, die leckagebedingt ausgetretenes Arbeitsfluid bis zum Adsorber zurücklegen muss. Diese Weglänge sollte möglichst kurz sein, aber da der Ort der Leckage vorab nicht bekannt ist, kann man den benötigten Adsorber nicht als Kompaktgerät direkt neben die Austrittsstelle platzieren, sondern der Adsorber muss praktisch überall in der Nähe sein. Aus dieser Forderung würde sich ein Adsorber mit einer sehr großen Eintrittsfläche ergeben, bei vorgegebenen Volumen ergäbe das eine entsprechend geringe Betttiefe.

Aus den typischen Aufstellungsbedingungen folgt, dass die Austrittsfläche des Adsorbers aus dem Gehäuse nicht automatisch der Eintrittsfläche in den Adsorber gegenüberliegend gewählt werden kann, die aufstellungsoptimale Strömung durch den Adsorber verläuft also im Allgemeinen nicht symmetrisch. Damit stellt sich im Adsorber das Problem des hydraulischen Abgleichs, es müssen alle adsorptiv wirkenden Anteile gleich gut durchströmt werden. Es müssen sowohl hydraulische Kurzschlussströme als auch undurchströmte Toträume konstruktiv vermieden werden.

Für ein lineares gestrecktes und beidseitig geöffnetes Sorptionsbett mit konstantem Querschnitt über das Sorptionsbett und gleicher Ein- wie Austrittsfläche ergibt sich ein ungünstiges Verhältnis zwischen ein- und ausgangsseitigem Strömungswiderstand. Im Falle einer Leckage des Kältekreises tritt je nach Leckageart ein hoher Volumenstrom von Kältemittel in das Gehäuse der Wärmepumpe ein und führt aufgrund des vorhandenen Strömungswiederstands des beidseitig geöffneten Sorptionsbettes zu einem Druckaufbau innerhalb des Wärmepumpengehäuses.

Der Strömungswiderstand des Sorptionsbettes ist ohne Beachtung der sorptiven Vorgänge von den geometrischen Eigenschaften des Sorptionsbettes abhängig, der Strömungswiderstand hängt dabei im Allgemeinen nichtlinear zur Strömungsgeschwindigkeit ab. Durch die sorptive Wechselwirkung des austretenden Kältemittels mit dem Sorptionsbett entsteht eine Durchbruchsfront von beladenem Sorptionsmaterial entlang der Strömungsrichtung durch das Sorptionsbett, welche sich mit einer bestimmten Geschwindigkeit durch das Sorptionsbett in Abhängigkeit des Volumenstroms, der Zusammensetzung des in das Sorptionsbett einströmenden Gases und der Geometrie des Sorptionsbettes ergibt.

Für ein nicht mit dem Sorptionsbett interagierendes Gas ergibt sich ein konstanter Strömungswiderstand über das Sorptionsbett, währenddessen sich für ein aktiv interagierendes Gas der unbeladene Teil des Sorptionsbettes mit geringer Impedanz darstellt und der beladene Teil sich als ein Strömungswiderstand äquivalent zu einem nicht interagierenden Sorptionsbett darstellt. Mit in Strömungsrichtung fortschreitender Beladung würde der Strömungswiderstand für die aktive Paarung also bei konstanter Anströmung weiter zunehmen. Das kann zu einem weiteren ungewollten Druckanstieg im Wärmepumpengehäuse führen und zu einer zeitlichen Verlangsamung des Adsorptionsvorganges.

Dadurch, dass das Sorptionsbett nach beiden Seiten offen ist, also auf der einen Seite hin zum Wärmepumpengehäuse und zur anderen Seite zum Aufstellungsraum, können Pendelströmungen entstehen. Der Grund hierfür sind die Abwärme des Verdichters, die zu einem Temperaturgradienten zwischen dem Innenraum des Wärmepumpengehäuses und dem Aufstellungsraum führt, ferner die Abwärme der Wärmetauscher und der Verrohrung. Weitere Gründe für Pendelströmungen sind allgemeine Luftdruckschwankungen. Diese Pendelströmungen können zu einem Eintrag von Feuchte und VOCs (Volatile Organic Compounds) in das Sorptionsbett aus der Luft des Ausstellungsraums führen. Nach einem Fehlerfall und einem teilbeladenen Sorptionsbett kann im Extremfall der Beladungszustand des Sorptionsbettes durch die Pendelströmung beeinflusst werden, was zu einem unstetigen Konzentrationsübergang von beladenem Sorptionsbett zum Aufstellungsraum hinsichtlich des Kältemittelpartialdrucks führen kann. Für diesen Fall muss die Lauflänge des Sorptionsbetts überproportional verlängert werden.

Solche Pendelströmungen werden durch die Impedanz erfasst, die eine komplexe Größe des Strömungswiderstandes für einen nichtwechselwirkenden Gasstrom und einen wechselwirkenden Gasstrom mit dem Sorptionsbett darstellt. Dieser Strömungswiderstand darf nicht zu einem Druckanstieg von über 50 kPa führen.

Die Aufgabe der Erfindung ist daher, eine verbesserte Vorrichtung für einen Adsorber bereitzustellen, welche die dargestellten Probleme besser löst und die Nachteile nicht mehr aufweist.

Die Erfindung löst die Aufgabe durch eine Adsorptionsvorrichtung zur Sicherung einer Wärmepumpe oder einer Kühl- oder Gefriereinrichtung,
- die mit einem entzündlichen oder gefährlichen Kältemittel betrieben wird,
- und die in einem Gehäuse installiert ist,
- wobei das Gehäuse geeignet für eine Aufstellung innerhalb eines Gebäudes ist, die Adsorptionsvorrichtung aufweisend
- mindestens einen Einlass für ein Luft-Gasgemisch, der mit dem Inneren des Gehäuses verbunden ist,
- mindestens einen Auslass für Luft, der mit der Umgebung des Gehäuses verbunden ist,
- mindestens ein Festbett,
wobei
- die Adsorptionsvorrichtung aus Teiladsorbern gebildet wird, wobei die einzelnen Teile entweder durch Strukturierungen voneinander abgetrennt sind oder aus miteinander verbundenen Einzeladsorbern gebildet sind,
- die Teiladsorber miteinander hydraulisch verbunden sind,
- mindestens eine verschließbare Einfüllöffnung und mindestens eine verschließbare Auslassöffnung für Adsorptionsmittel für jeden Teiladsorber (4, 6, 8, 10) vorgesehen sind, und
- innerhalb der Adsorptionsvorrichtung (1) Verengungen und/oder Umlenkungen vorgesehen sind, die den Strömungswiderstand bei Durchströmung erhöhen

Hierbei sind mindestens eine verschließbare Einfüllöffnung und mindestens eine verschließbare Auslassöffnung für Adsorptionsmittel für jeden Teiladsorber vorgesehen. Alternativ kann das Adsorptionsmittel aber auch bei der Fertigung eingebracht werden und derjenige Teiladsorber danach verschlossen werden.

In Ausgestaltungen ist vorgesehen, dass das Verhältnis von Luftaustrittsfläche zu Gaseintrittsfläche der Adsorptionsvorrichtung kleiner als 1, noch besser kleiner als 0,1 und am Besten kleiner als 0,01 ist.

Das Gehäuse kann dabei ein Kapselgehäuse eines Kältekreises in einer Wärmepumpe oder ein Gehäuse, in welchem eine Wärmepumpe oder eine Kühl-Gefriereinrichtung installiert ist, sein. Es kann sich dabei auch um mehrere ineinander geschachtelte Gehäuse handeln.

In einer Ausgestaltung ist vorgesehen, dass die Teiladsorber jeder für sich an den Außenseiten des Gehäuses angeordnet sind und durch einen gemeinsamen Auslass für Luft hydraulisch verbunden sind. Dabei können die Teiladsorber das Gehäuse auch weitgehend nahezu vollständig umschießen. Ebenso kann vorgesehen werden, dass die Teiladsorber jeder für sich an den Innenseiten des Gehäuses angeordnet sind und das Innere nahezu vollständig umschließen, wobei sie über hydraulische Verbindungen miteinander verbunden sind. Auch beides ist möglich, beispielsweise im Fall von Nachrüstungen. Um eine besonders große Oberfläche für den Gaseintritt bereitzustellen, können die Teiladsorber, die den Gaseinlass bilden, auch als Faltenfilter ausgebildet sein.

Weitere Ausgestaltungen betreffen die Verengungen und/oder Umlenkungen. Hierbei wird vorgesehen, dass einzeln oder in Kombination
- an verschiedenen Positionen innerhalb eines Festbetts Blenden an verschiedenen Positionen vorgesehen werden,
- ein kontinuierlich sich verengender Querschnittsverlauf über die Bettlänge des Festbettes vorgesehen wird,
- das Festbett an verschiedenen Positionen gefaltet oder geknickt wird.

Insofern der Adsorber aus mehreren Teiladsorbern gebildet wird, können diese hintereinander oder parallel zueinander verschaltet werden. Es ist auf diese Weise möglich, den Bauraum innerhalb des Wärmepumpengehäuses optimal zu nutzen, da alle Teiladsorber verschiedene Geometrien haben können, wobei sie durch Rohrleitungen miteinander hydraulisch verbunden sind. Die Teiladsorber können dabei auch an den Seitenwänden oder die Ecken um das Kältekreisgehäuse bzw. das Wärmepumpengehäuse herumgeführt werden.

Weitere Ausgestaltungen betreffen die Adsorptionsmittel. Diese sind einerseits auf das Kältemittel abzustimmen, andererseits auf die möglichen Kontaminationen des Aufstellungsraums. So kann vorgesehen werden, dass am Auslass der Adsorbervorrichtung ein Sorptionsmittel für Kontamination aus dem Aufstellungsraum und am Gaseinlass der Adsorptionsvorrichtung Adsorptionsmittel für austretendes Kältemittel eingesetzt wird. Die Festbetten können mit Schüttungen von Formkörperpellets, von gebrochenen Gut, mit Wabenkörpern oder mit porösen, mit Aktivkohle belegten Schaumstoffen oder auch mit sonstigen Schüttgütern befüllt sein. Auch kann vorgesehen werden, dass das Adsorptionsmittel eine Schüttung aus Aktivkohlepellets ist oder enthält. Vorzugsweise wird vorgesehen, dass die Aktivkohlepellets ein Granulat oder ein Extrudat sind, bezüglich mindestens einer Achse rund sind und Durchmesser zwischen 0,05 und 40 Millimetern vorzugsweise zwischen 3 und 8 Millimeter aufweisen. Das entspricht üblichen zylindrischen oder runden Pellets.

In anderen Ausgestaltungen ist vorgesehen, dass das Adsorptionsmittel offenporigen mit Aktivkohle belegten Polyurethanschaumstoff enthält. Vorzugsweise ist vorgesehen, dass der offenporige, mit Aktivkohle belegte Polyurethanschaumstoff in Form von Flächenelementen eingebracht wird. Solche Flächenelemente sind im Handel gut erhältlich, beispielsweise mit 21 Millimeter Dicke, einem Flächengewicht von 1,3 kg/m² bei einer Aktivkohleauflage von 0,55 kg/m². Sie können aber auch als Formteile passend für den Adsorber hergestellt werden und der Strömungswiderstand ist über die Poren einstellbar. Es ist auf diese Weise also möglich, längere Strecken zwischen Einlass und Auslass mit solchem Schaumstoff zu versehen, der einen geringeren Druckverlust erzeugt, als für kürzere Strecken.

Es können in Ausgestaltungen auch sowohl Flächenelemente aus offenporigem, mit Aktivkohle belegtem Polyurethanschaumstoff als auch eine Schüttung aus Aktivkohlepellets vorgesehen werden, wobei die Poren des offenporigen, mit Aktivkohle belegten Polyurethanschaumstoffs kleiner ausgebildet sind als die Aktivkohlepellets der Schüttung, damit die Poren nicht verstopft werden. Es ist jedoch von Vorteil, wenn die Pellets in die Schaumstoffporen etwas einsinken, weil dadurch die Randgängigkeit der Schüttung unterbunden wird und die Strömung dadurch insgesamt vergleichmäßigt wird.

Weitere Ausgestaltungen betreffen den Luftausgang der Adsorptionsvorrichtung, von dem aus die von Kältemittel befreite Luft in die Umgebung abgeführt wird, wobei aber gleichermaßen zu verhindern ist, dass aus der Umgebung kontaminierende Stoffe in den Adsorber eintreten. Hier kann vorgesehen werden, dass eine Schicht zur Erhöhung des Strömungswiderstandes eingebracht wird. Dies kann auch eine molekülsensitive Sperrschicht sein, die Moleküle größer oder gleich dem Moleküldurchmesser des Kältemittels unpassierbar macht. Das hat den Vorteil, dass typische kontaminierende Substanzen aus der Umgebungsluft nicht in den Adsorber eintreten können, da diese üblicherweise größer sind. Außerdem kann kein Kältemittel austreten. Kleinere Moleküle, also beispielsweise Sauerstoff und Stickstoff, können dagegen ungehindert passieren. Anstelle der molekülsensitiven Sperrschicht kann auch eine semipermeable Membran vorgesehen werden. Die Schicht zur Erhöhung des Strömungswiderstands kann dabei die Trägerschicht sein.

Weiterhin kann am Luftauslass der Adsorptionsvorrichtung ein Absperrorgan vorgesehen werden, welches als Rückschlagventil wirkt und den Lufteintritt aus dem Außenraum verhindert. Dieses Absperrorgan kann auch als motorisierte Klappe ausgeführt werden, die nur in bestimmten Situationen die Adsorptionsvorrichtung verschließt.

Entscheidend für das Zusammenwirken der Teiladsorber als Adsorptionsvorrichtung ist, dass die Teiladsorber hydraulisch miteinander verbunden sind und strömungstechnisch ein hydraulischer Abgleich vorgenommen ist. Das kann dadurch erreicht werden, dass außer dem Luftauslass auch die verschiedenen Gaseinlässe hydraulisch miteinander verbunden werden, oder auch zwischen den Teiladsorbern hydraulische Verbindungen vorgesehen werden.

Die Erfindung wird nachfolgend anhand von 9 Prinzipskizzen näher erläutert. Hierbei zeigen:
Fig. 1 eine Verschaltungsübersicht der einzelnen Teiladsorber
Fig. 2 eine Ausführungsvariante mit abgeteilten Festbettpartitionen,
Fig. 3 eine Ausführungsvariante mit Querschnittsverengung über die Bettlauflänge,
Fig. 4 eine Ausführungsvariante mit abgewinkelten Teiladsorbern,
Fig. 5 eine Ausführungsvariante mit einem abgeknickten Festbett,
Fig. 6 einen Verteilung von Teiladsorbern um ein Wärmepumpengehäuse,
Fig. 7 eine Ausführungsvariante mit Strömungswiderstand und Membran am Luftauslass,
Fig. 8 eine Ausführungsvariante mit Rückschlagventil am Luftauslass,
Fig. 9 eine Ausführungsvariante mit motorisierter Rückschlagklappe am Luftauslass,

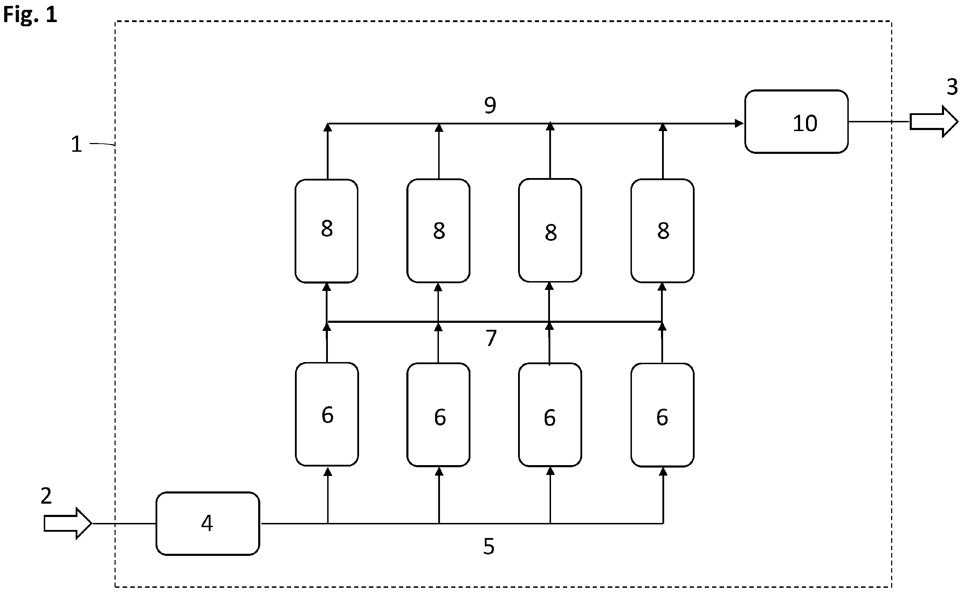

Fig. 1 zeigt eine Verschaltungsübersicht der einzelnen Teiladsorber. Hierbei wird vereinfachend angenommen, dass die einzelnen Teiladsorber, die zusammen die Adsorptionsvorrichtung 1 bilden, über Rohrleitungen miteinander verbunden sind. Im Falle einer Leckage tritt das Gas-Luftgemisch, was sich im Gehäuse bildet, im Gas-Luft-Einlass 2 in den Teiladsorber 4 ein. Um Strahlströmungen zu verhindern, die einen partiellen Durchbruch des Sorptionsbettes verursachen könnten, oder diese wenigstens zu brechen, wird hier als Adsorberfüllung bevorzugt ein offenporiger Schaumstoff oder eine Wabenstruktur verwendet, deren Oberflächen mit Aktivkohle oder eines anderen zur Aufnahme des jeweiligen Kältemittels geeigneten Sorptionsmittels belegt sind. Von dort aus wird die Luft-Gasströmung über die Verteilerleitung 5 auf die parallel geschalteten Teiladsorber 6 aufgeteilt, wobei nachfolgend der wesentliche Teil der Adsorption stattfindet. Danach treffen sich die Ausgänge der Teiladsorber 6 in der Ausgleichsleitung 7, wo ein Druckausgleich und eine Durchmischung stattfinden. Auch eine Messstelle kann hier angeordnet werden, um eine Durchbruchszone zu messen. Von dort aus treten die Gasströme in die Teiladsorber 8 ein, die als Nachreinigung dienen. In der Sammelleitung 9 werden die Luftströme gesammelt und über den Teiladsorber 10, der auch dem Schutz von Kontamination aus dem Aufstellraum dient, durch den Luft-Auslass 3 nach außen geleitet. Die Teiladsorber 6 und 8 können sich dabei aus unterschiedlichen Adsorberformen und Größen zusammensetzen, auch ist die Anzahl beliebig. Wichtig ist dabei aber bei jeder Verschaltungsart der hydraulische Abgleich, um ungleichförmige Belastung zu vermeiden.

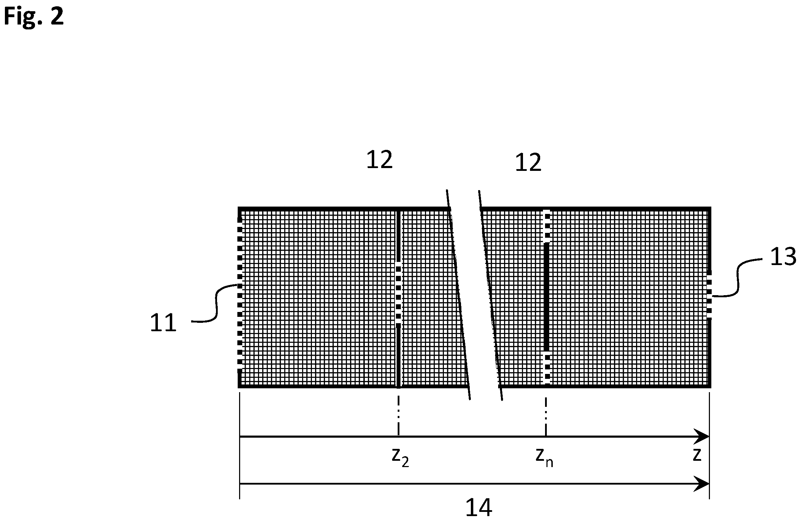

Fig. 2 zeigt eine Adsorptionsvorrichtung mit einem eigenen Gaseinlass 11, einem Luftauslass 13 sowie n Festbettpartitionen 12, wobei n eine ganze Zahl ist. Der Gaseinlass ist dabei deutlich größer als der Luftauslass 13, die Festbettpartitionen 12 sind durch blendenartige Schikanen voneinander getrennt und ergeben in ihrer Summe die Bettlauflänge 14. Solche Adsorptionsvorrichtungen können entweder als Adsorptionsvorrichtung 1 betrachtet werden, bei denen die einzelnen Partitionen den Teiladsorbern 4, 6, 8 und 10 aus Fig. 1 entsprechen, oder sie können selbst Teiladsorber sein.

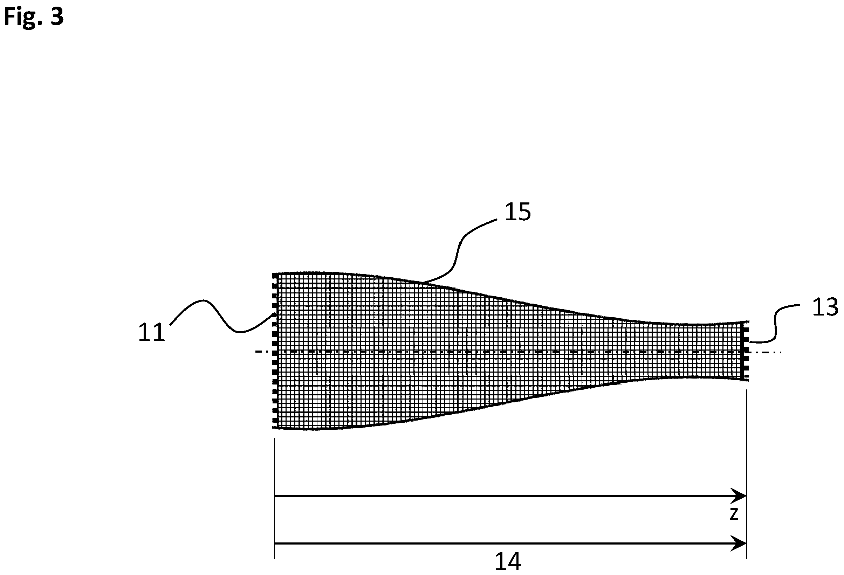

Fig. 3 zeigt ebenfalls eine Adsorptionsvorrichtung (1) mit einem eigenen Gaseinlass 11 und einem Luftauslass 13. Hierbei werden die Festbettpartitionen 12 gegenüber der in Fig. 2 gezeigten Variante durch eine Gehäusekontur 15 ersetzt, wobei hier nur eine Festbettpartition gezeigt ist. Die Gehäusekontur 15 berücksichtigt, dass bei einer abrupten Querschnittsänderung, wie etwa einer Blende innerhalb eines Festbetts oder einer relativ kleinen Öffnung am Ausgang eines Teiladsorbers, ein relativ großer Teil des Festbetts nicht durchströmt wird. Die Gehäusekontur 15 führt dazu, dass die Strömungsgeschwindigkeit während des Adsorptionsvorgangs überwiegend konstant bleibt, auch wenn ein relativ großer Teil des eintretenden Gases nach seiner Adsorption nicht mehr Teil der Strömung ist.

Die Kontur kann dabei fast beliebig gewählt werden, wenn der gewünschte Verlauf der Querschnittsverengung den Erfordernissen entspricht, was am Beispiel des Kältemittels R290 näher gezeigt wird. Pro Kilogramm Inventar R290 im betreffenden Kältekreislauf beträgt der Austrittsquerschnitt der Austrittsöffnung zum Aufstellungsraum zwischen 1 und 10⁵ cm²/kg _{R290} und die Bettlauflänge sollte zwischen 5 und 100 cm/ kg _{R290} liegen. Die Menge an Adsorptionsmittel, welche in der gesamten Adsorptionsvorrichtung unterzubringen ist, ergibt sich daher zu einer Mindestbeladungskapazität des Sorptionsmittels von 2,5 Gew.%/kg bei 100% Partialdruck des Kältemittels R290.

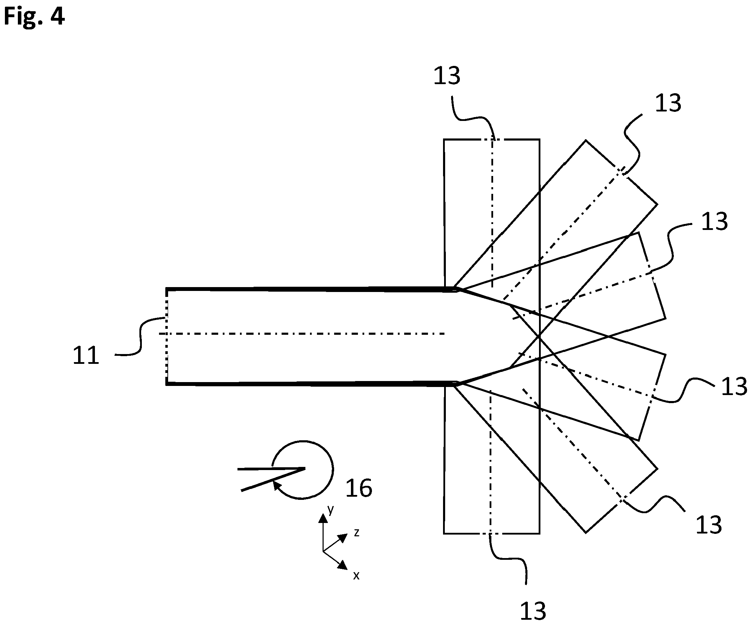

Fig. 4 zeigt mehrere abgeknickte Adsorber, wobei jeder der Teiladsorber auch mehrere Umlenkstellen 16 aufweisen kann. Der Vorteil dabei ist, dass das Leervolumen des Gehäuses auf diese Weise optimal ausgenutzt werden kann, wenn gewundene Teiladsorber verwendet werden.

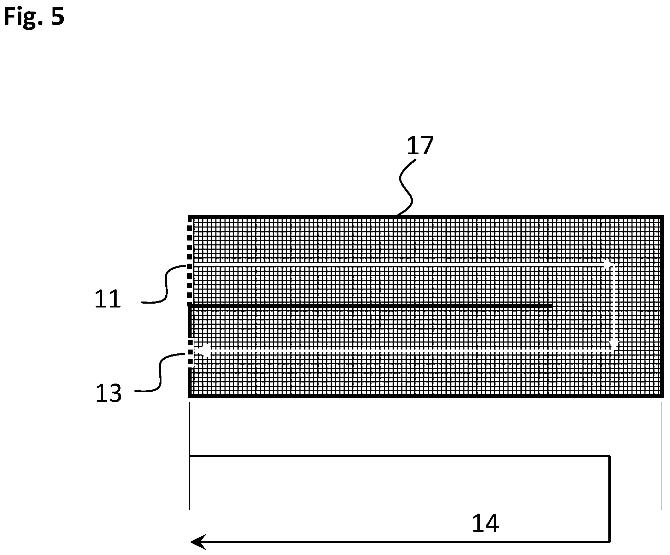

Fig. 5 zeigt einen Teiladsorber 17, bei dem eine Umlenkung um 180 Grad vorgenommen wurde. Durch mehrere solcher Umlenkungen in treppenartiger Weise kann eine sehr lange Bettlauflänge erreicht werden, wobei die Querschnittsfläche mit der Bettlauflänge immer weiter abnehmen kann.

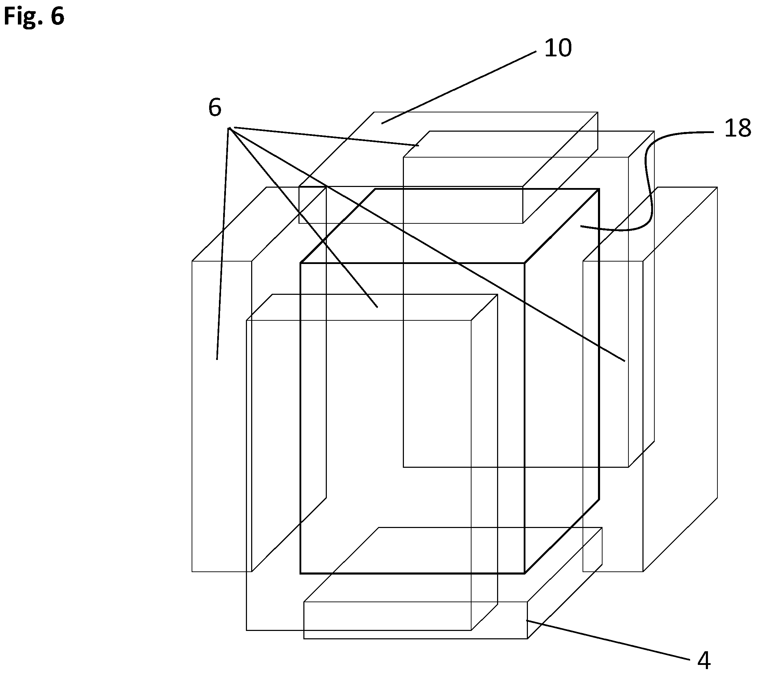

Fig. 6 zeigt ein Wärmepumpengehäuse 18, bei dem ein Teiladsorber 4 unten als Gas-Luft-Einlass ausgebildet ist. An diesen sind an vier Seiten die Teiladsorber 6 angeschlossen, die wiederum oben an den Teiladsorber 10 angeschlossen sind, der den Luftauslass enthält.

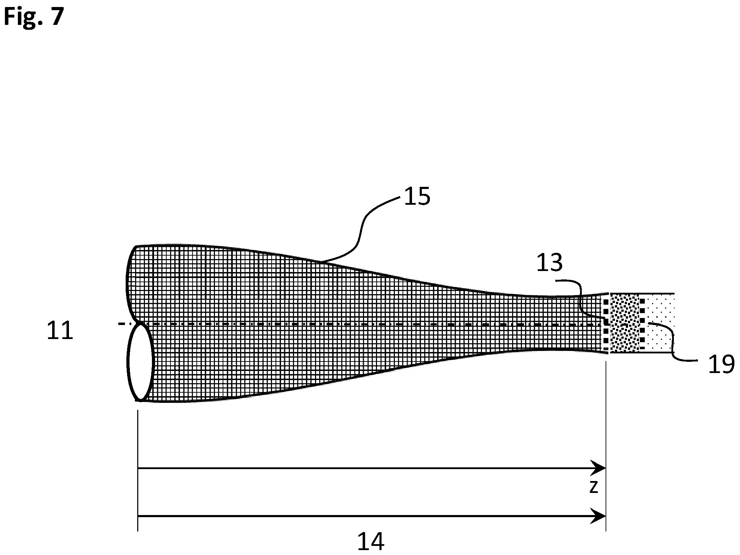

Fig. 7 zeigt einen Teiladsorber wie in Fig. 3, der zusätzlich am Luftauslass einen Strömungswiderstand 19 mit Membran enthält. Die Membran dient in diesem Fall dazu, dass größere Kontaminaten aus dem Aufstellungsraum beim Atmen der Adsorptionsvorrichtung nicht in das Adsorptionsmittel gelangen und außerdem, dass im Falle eines Durchbruchs trotzdem kein Kältemittel in den Aufstellungsraum gelangen kann.

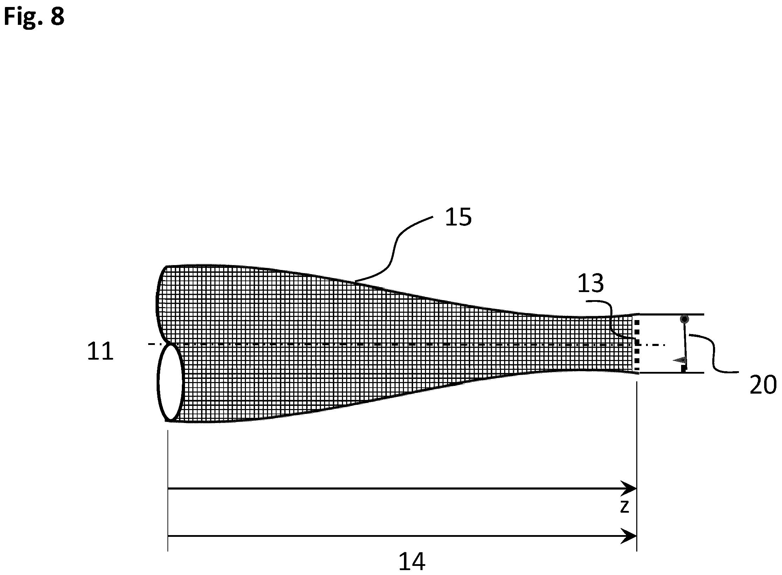

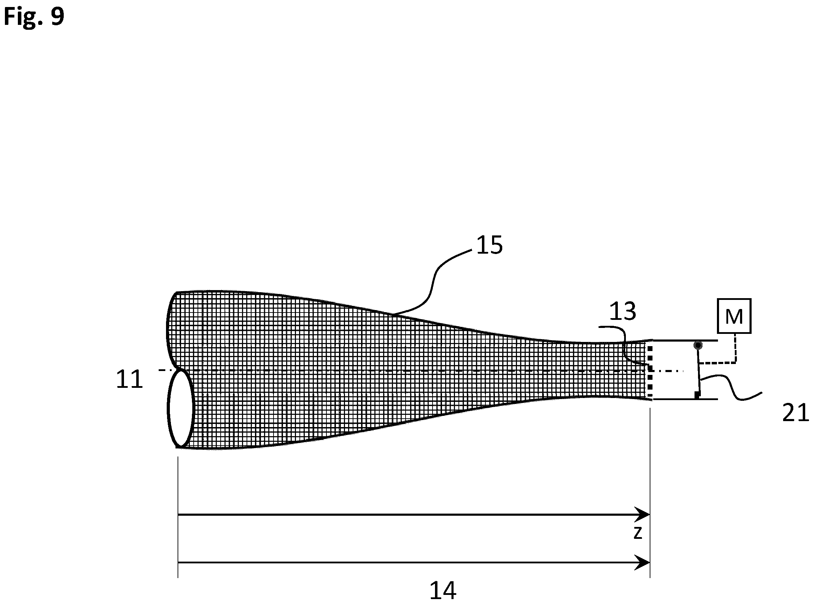

Fig. 8 zeigt einen Teiladsorber wie in Fig. 3, der zusätzlich am Luftauslass eine Rückschlagklappe 20 aufweist. Auf diese Weise kann keine Luft aus dem Aufstellungsraum in die Adsorptionsvorrichtung gelangen. In Fig. 9 wird gezeigt, dass außerdem eine Motorisierung 21 dieser Klappe vorgesehen ist, die die Klappe im Falle eines kritischen Unterdrucks im Gehäuse öffnen kann.

### Bezugszeichenliste

- 1: Adsorptionsvorrichtung
- 2: Gas-Luft-Einlass
- 3: Luft-Auslass
- 4: Teiladsorber
- 5: Verteilerleitung
- 6: Teiladsorber
- 7: Ausgleichsleitung
- 8: Teiladsorber
- 9: Sammelleitung
- 10: Teiladsorber
- 11: Gaseinlass
- 12: Festbettpartition
- 13: Luftauslass
- 14: Bettlauflänge
- 15: Gehäusekontur
- 16: Umlenkwinkel
- 17: Abgeknickter Adsorber
- 18: Wärmepumpengehäuse
- 19: Strömungswiderstand mit Membran
- 20: Rückschlagklappe
- 21: Motorisierte Klappe

## Patentansprüche

1. Adsorptionsvorrichtung (1) zur Sicherung einer Wärmepumpe oder einer Kühl- oder Gefriereinrichtung,
- die mit einem entzündlichen oder gefährlichen Kältemittel betrieben wird,
- und die in einem Gehäuse installiert ist,
- wobei das Gehäuse geeignet für eine Aufstellung innerhalb eines Gebäudes ist, die Adsorptionsvorrichtung aufweisend
- mindestens einen Einlass (2) für ein Luft-Gasgemisch, der mit dem Inneren des Gehäuses verbunden ist,
- mindestens einen Auslass (3) für Luft, der mit der Umgebung des Gehäuses verbunden ist,
- mindestens ein Festbett,
**dadurch gekennzeichnet, dass**
- die Adsorptionsvorrichtung (1) aus Teiladsorbern (4, 6, 8, 10) gebildet wird, wobei die einzelnen Teile entweder durch Strukturierungen voneinander abgetrennt sind oder aus miteinander verbundenen Einzeladsorbern gebildet sind,
- die Teiladsorber (4, 6, 8, 10) miteinander hydraulisch verbunden (5, 7, 9) sind,
- mindestens eine verschließbare Einfüllöffnung und mindestens eine verschließbare Auslassöffnung für Adsorptionsmittel für jeden Teiladsorber (4, 6, 8, 10) vorgesehen sind,
- innerhalb der Adsorptionsvorrichtung (1) Verengungen und/oder Umlenkungen vorgesehen sind, die den Strömungswiderstand bei Durchströmung erhöhen.

2. Vorrichtung nach Anspruch 1, **dadurch gekennzeichnet, dass** das Verhältnis von Luftaustrittsfläche zu Gaseintrittsfläche der Adsorptionsvorrichtung (1) kleiner als 1, vorzugsweise kleiner als 0,1 und besonders bevorzugt kleiner als 0,01 ist.

3. Vorrichtung nach einem der Ansprüche 1 oder 2, **dadurch gekennzeichnet, dass** die Teiladsorber (4, 6, 8, 10) jeder für sich an den Außenseiten des Gehäuses angeordnet sind und durch einen gemeinsamen Auslass (3) für Luft hydraulisch verbunden sind.

4. Vorrichtung nach einem der Ansprüche 1 oder 2, **dadurch gekennzeichnet, dass** die Teiladsorber (4, 6, 8, 10) jeder für sich an den Innenseiten des Gehäuses angeordnet sind und durch einen gemeinsamen Einlass (2) für Gas hydraulisch verbunden sind.

5. Vorrichtung nach einem der Ansprüche 1 bis 4, **dadurch gekennzeichnet, dass** die Teiladsorber (4), die den Gaseinlass (2) bilden, als Faltenfilter ausgebildet sind.

6. Vorrichtung nach einem der Ansprüche 1 bis 5, **dadurch gekennzeichnet, dass** an verschiedenen Positionen innerhalb eines Festbetts Blenden an verschiedenen Positionen vorgesehen werden.

7. Vorrichtung nach einem der Ansprüche 1 bis 6, **dadurch gekennzeichnet, dass** ein kontinuierlich sich verengender Querschnittsverlauf über die Bettlänge des Festbettes vorgesehen wird,

8. Vorrichtung nach einem der Ansprüche 1 bis 7, **dadurch gekennzeichnet, dass** das Festbett an verschiedenen Positionen gefaltet oder geknickt wird.

9. Vorrichtung nach einem der Ansprüche 1 bis 8, **dadurch gekennzeichnet, dass** die Teiladsorber (4, 6, 8, 10) hintereinander oder parallel zueinander verschaltet werden und so gemeinsam die Adsorptionsvorrichtung (1) bilden.

10. Vorrichtung nach einem der Ansprüche 1 bis 9, **dadurch gekennzeichnet, dass** am Auslass der Adsorptionsvorrichtung ein Sorptionsmittel für Kontamination aus dem Aufstellungsraum und am Einlass der Adsorptionsvorrichtung Adsorptionsmittel für austretendes Kältemittel eingesetzt wird.

11. Vorrichtung nach einem der Ansprüche 1 bis 10, **dadurch gekennzeichnet, dass** die Festbetten mit Schüttungen von Formkörperpellets, von gebrochenen Gut, mit Wabenkörpern oder mit porösen, mit Aktivkohle belegten offenporigen Schaumstoffen oder mit einer Schüttung aus Aktivkohlepartikeln befüllt sind, wobei die Aktivkohlepartikel ein Granulat oder ein Extrudat sind und Partikelabmessungen zwischen 0,1 und 15 Millimetern, vorzugsweise zwischen 1 und 5 Millimeter aufweisen.

12. Vorrichtung nach einem der Ansprüche 1 bis 11, **dadurch gekennzeichnet, dass** am Luftauslass (3) der Adsorptionsvorrichtung (1) eine Schicht zur Erhöhung des Strömungswiderstandes vorgesehen ist.

13. Vorrichtung nach einem der Ansprüche 1 bis 12, **dadurch gekennzeichnet, dass** am Luftauslass (3) der Adsorptionsvorrichtung (1) eine molekülsensitive Sperrschicht vorgesehen ist, die Moleküle größer oder gleich dem Moleküldurchmesser des Kältemittels unpassierbar macht.

14. Vorrichtung nach Anspruch 13, **dadurch gekennzeichnet, dass** am Luftauslass (3) der Adsorptionsvorrichtung (1) eine semipermeable Membran vorgesehen ist, die Moleküle größer oder gleich dem Moleküldurchmesser des Kältemittels unpassierbar macht.

15. Vorrichtung nach einem der Ansprüche 1 bis 14, **dadurch gekennzeichnet, dass** am Luftauslass des Adsorbers ein Absperrorgan als Rückschlagventil oder eine motorisch betätigbare Rückschlagklappe (20, 21) vorgesehen wird.
